(19) **Europäisches Patentamt**
**European Patent Office**
**Office européen des brevets**

(11) **EP 4 195 829 A1**

(12) **EUROPEAN PATENT APPLICATION**
published in accordance with Art. 153(4) EPC

(43) Date of publication:
**14.06.2023 Bulletin 2023/24**

(51) International Patent Classification (IPC):
*H04W 72/04* (2023.01)      *H04W 52/36* (2009.01)
*H04W 52/14* (2009.01)      *H04L 5/00* (2006.01)
*H04W 76/28* (2018.01)      *H04W 74/08* (2009.01)

(21) Application number: **21853991.4**

(22) Date of filing: **21.07.2021**

(52) Cooperative Patent Classification (CPC):
**H04L 5/00; H04W 52/14; H04W 52/36;**
**H04W 72/04; H04W 74/08; H04W 76/28**

(86) International application number:
**PCT/KR2021/009431**

(87) International publication number:
**WO 2022/030826 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.08.2020   KR 20200098214**
**28.09.2020   KR 20200126151**
**04.06.2021   KR 20210072843**

(71) Applicant: **LG Electronics Inc.**
**Seoul 07336 (KR)**

(72) Inventors:
• **SHIN, Seokmin**
  **Seoul 06772 (KR)**
• **KIM, Seonwook**
  **Seoul 06772 (KR)**
• **YANG, Suckchel**
  **Seoul 06772 (KR)**

(74) Representative: **Katérle, Axel**
**Wuesthoff & Wuesthoff**
**Patentanwälte PartG mbB**
**Schweigerstraße 2**
**81541 München (DE)**

(54) **METHOD AND APPARATUS FOR TRANSMITTING AND RECEIVING SIGNALS IN WIRELESS COMMUNICATION SYSTEM**

(57)     A method and apparatus for transmitting and receiving signals in a wireless communication system, according to an embodiment of the present disclosure, comprise receiving information about scheduling granularity for PUSCHs and/or PDSCHs, and transmitting the PUSCHs, to which a first SCS is applied, and/or receiving the PDSCHs on the basis of the information. A value of the scheduling granularity may be determined on the basis of a ratio of the first SCS and a reference SCS.

【Fig. 11】

receiving information on scheduling granularity ～S1101

transmitting a PUSCH or receiving a PDSCH based on the information ～S1103

**Description**

**TECHNICAL FIELD**

The present disclosure relates to a method and apparatus for use in a wireless communication system.

**BACKGROUND ART**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

**DISCLOSURE**

**Technical Problem**

An object of the present disclosure is to provide a signal transmission/reception method for efficiently performing resource allocation and signal transmission/reception in a wireless communication system and an apparatus therefor.
The objects of the present disclosure are not limited to what has been described hereinabove and other objects may be derived from embodiments of the present disclosure.

**Technical Solution**

The present disclosure provides a signal transmission/reception method and apparatus in a wireless communication system.
According to an aspect of the present disclosure, provided herein is a method of transmitting and receiving a signal by a user equipment (LTE) in a wireless communication system, including receiving information about scheduling granularity for physical uplink shared channels (PUSCHs) and/or physical downlink shared channels (PDSCHs); and transmitting the PUSCHs and/or receiving the PDSCHs, based on a first subcarrier spacing (SCS) and the information. A value of the scheduling granularity is determined based on a ratio of the first SCS to a reference SCS.
In another aspect of the present disclosure, provided herein is a user equipment (UE) for transmitting and receiving a signal in a wireless communication system, including at least one transceiver; at least one processor; and at least one memory operably connectable to the at least one processor and configured to store instructions that, when executed, cause the at least one processor to perform specific operations. The specific operations include the method of transmitting and receiving a signal.
In another aspect of the present disclosure, provided herein is an apparatus for a user equipment (LTE), including at least one processor; and at least one computer memory operably connectable to the at least one processor and configured to cause, when executed, the at least one processor to perform operations. The operations include the method of transmitting and receiving a signal.
In another aspect of the present disclosure, provided herein is a computer-readable storage medium including at least one computer program that causes, when executed, at least one processor to perform operations. The operations include the method of transmitting and receiving a signal.
In the methods and the apparatuses, the value of the scheduling granularity may be determined by a value obtained by multiplying the ratio by a value indicated by the information.
In the methods and the apparatuses, the ratio may be a value obtained by dividing the first SCS by the reference SCS or a value obtained by dividing the reference signal by the first SCS.
In the methods and the apparatuses, the value of the scheduling granularity may be determined as 1 based on the value obtained by multiplying the ratio by the value indicated by the information being less than 1.
In the methods and the apparatuses, the reference SCS may be an SCS preconfigured between the UE and a base station (BS), an SCS used for an initial access procedure of the UE, or an SCS indicated to the UE by the BS.
The communication apparatuses may include an autonomous driving vehicle capable of communicating with at least a UE, a network, and another autonomous driving vehicle other than the communication apparatuses.
The foregoing aspects of the present disclosure are merely a part of the embodiments of the present disclosure and various embodiments into which the features of the present disclosure are incorporated may be derived and understood by persons skilled in the art from the following detailed description of the present disclosure.

**Advantageous Effects**

According to an embodiment of the present disclosure, when resource allocation and signal transmission/reception are performed by a communication device, more efficient resource allocation and signal transmission/reception may be performed through an operation differentiated from the prior art.

The effects of the present disclosure are not limited to what has been described hereinabove and other effects may be derived from embodiments of the present disclosure.

**Brief Description of Drawings**

FIG. 1 illustrates a radio frame structure.

FIG. 2 illustrates a resource grid during the duration of a slot.

FIG. 3 illustrates a self-contained slot structure.

FIG. 4 illustrates an acknowledgment/negative acknowledgment (ACK/NACK) transmission process.

FIG. 5 illustrates an exemplary PUSCH transmission process.

FIG. 6 illustrates a wireless communication system supporting an unlicensed band.

FIG. 7 illustrates an exemplary method of occupying resources in an unlicensed band.

FIGS. 8 and 9 are flowcharts illustrating channel access procedures (CAPs) for signal transmission in an unlicensed band.

FIG. 10 illustrates a resource block (RB) interlace.

FIG. 11 is a diagram illustrating uplink (UL) channel transmission according to the embodiments of the present disclosure.

FIGS. 12 to 15 show an example of apparatuses according to an embodiment of the present disclosure.

**BEST MODE**

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

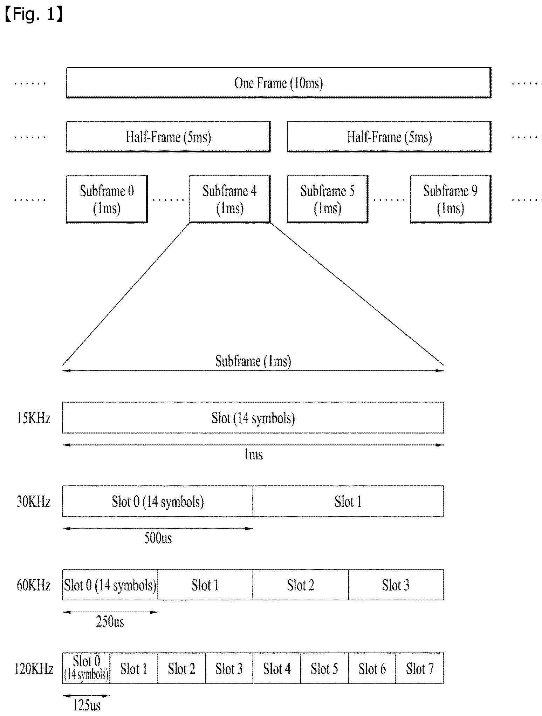

FIG. 1 illustrates a radio frame structure used for NR.

In NR, UL and DL transmissions are configured in frames. Each radio frame has a length of 10 ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS ($15*2^u$) | $N^{slot}_{symb}$ | $N^{frame,u}_{slot}$ | $N^{subframe,u}_{slot}$ |
|---|---|---|---|
| 1.5KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot<br>* $N^{frame,u}_{slot}$: number of slots in a frame<br>* $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 5 2600MHz | 60, 120, 240kHz |

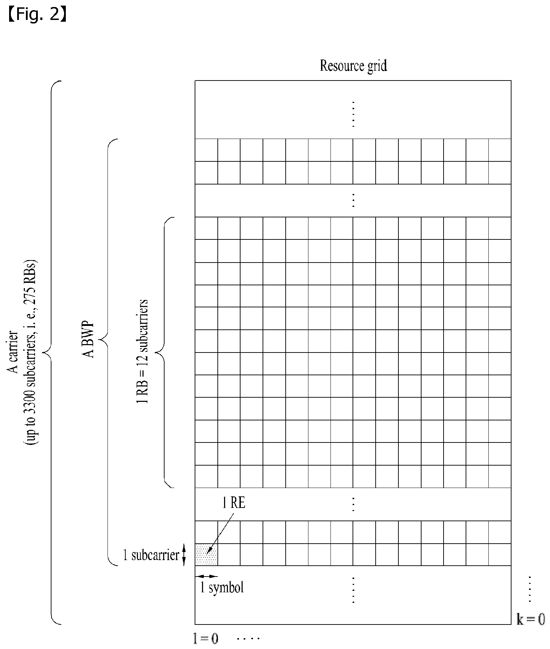

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs $\{m, M+m, 2M+m, 3M+m,...\}$. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a LTE receives information from a BS in downlink (DL), and the LTE transmits information to the BS in uplink (LTL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

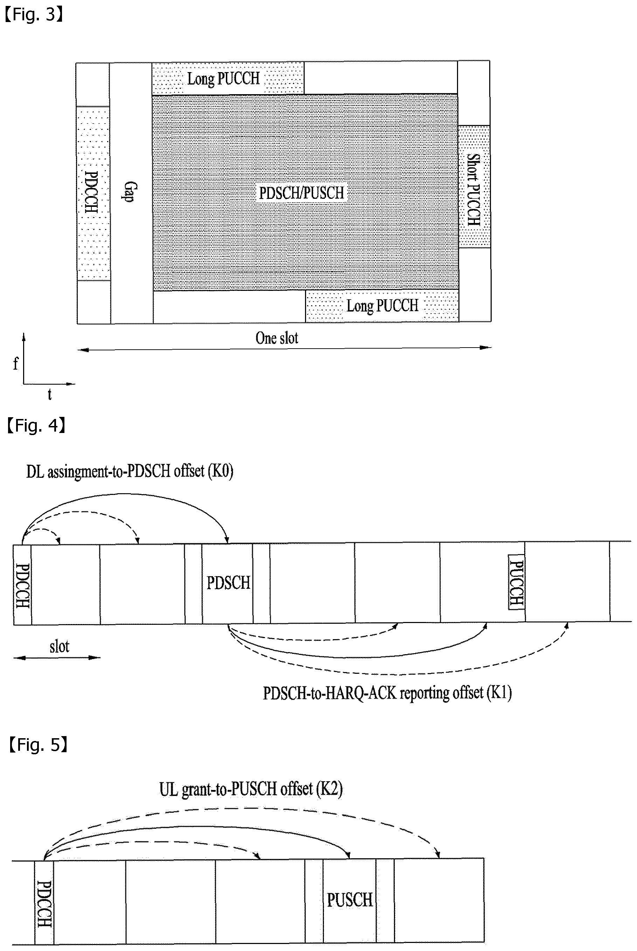

FIG. 3 illustrates a structure of a self-contained slot.

In the NR system, a frame has a self-contained structure in which a DL control channel, DL or LTL data, a LTL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the LTL control region may be used for DL data transmission or LTL data transmission. For example, the following configuration may be considered. Respective sections are listed in a temporal order.

In the present disclosure, a base station (BS) may be, for example, a gNode B (gNB).

UL Physical Channels/Signals

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.

- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 7 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

[Table 7]

| PUCCH format | Length in OFDM symbols $N_{symb}^{PUCCH}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

(0) PUCCH Format 0 (PF0)

- Supportable UCI payload size: up to K bits (e.g., K = 2)
- Number of OFDM symbols included in one PUCCH: 1 to X symbols (e.g., X = 2)
- Transmission structure: only a UCI signal is configured with no DM-RS, and a UCI state is transmitted by selecting and transmitting one of a plurality of sequences.

(1) PUCCH Format 1 (PF1)

- Supportable UCI payload size: up to K bits (e.g., K = 2)
- Number of OFDM symbols included in one PUCCH: Y to Z symbols (e.g., Y = 4 and Z = 14)
- Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).

(2) PUCCH Format 2 (PF2)

- Supportable UCI payload size: more than K bits (e.g., K = 2)
- Number of OFDM symbols included in one PUCCH: 1 to X symbols(e.g., X = 2)
- Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.

(3) PUCCH Format 3 (PF3)

- Supportable UCI payload size: more than K bits (e.g., K = 2)
- Number of OFDM symbols included in one PUCCH: Y to Z symbols (e.g., Y = 4 and Z = 14)
- Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.

(4) PUCCH Format 4 (PF4)

- Supportable UCI payload size: more than K bits (e.g., K = 2)
- Number of OFDM symbols included in one PUCCH: Y to Z symbols (e.g., Y = 4 and Z = 14)
- Transmission structure: UCI and a DMRS are configured/mapped in/to different symbols based on TDM. The DFT is applied to encoded UCI bits with no multiplexing between UEs.

FIG. 4 illustrates an ACK/NACK transmission process. Referring to FIG. 4, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 or DCI format 1_1 may include the following information.

- Frequency domain resource assignment: Indicates an RB set assigned to a PDSCH.
- Time domain resource assignment: Indicates K0 and the starting position (e.g., OFDM symbol index) and length (e.g., the number of OFDM symbols) of the PDSCH in a slot.
- PDSCH-to-HARQ_feedback timing indicator: Indicates K1.

After receiving a PDSCH in slot #(n+K0) according to the scheduling information of slot #n, the UE may transmit UCI on a PUCCH in slot #(n+K1). The UCI includes an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

FIG. 5 illustrates an exemplary PUSCH transmission process. Referring to FIG. 5, the LTE may detect a PDCCH in slot #n. The PDCCH may include UL scheduling information (e.g., DCI format 0_0 or DCI format 0_1). DCI format 0_0 and DCI format 0_1 may include the following information.

- Frequency domain resource assignment: Indicates an RB set allocated to a PUSCH.
- Time domain resource assignment: Specifies a slot offset K2 indicating the starting position (e.g., symbol index) and length (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## 1. Wireless Communication System Supporting Unlicensed Band

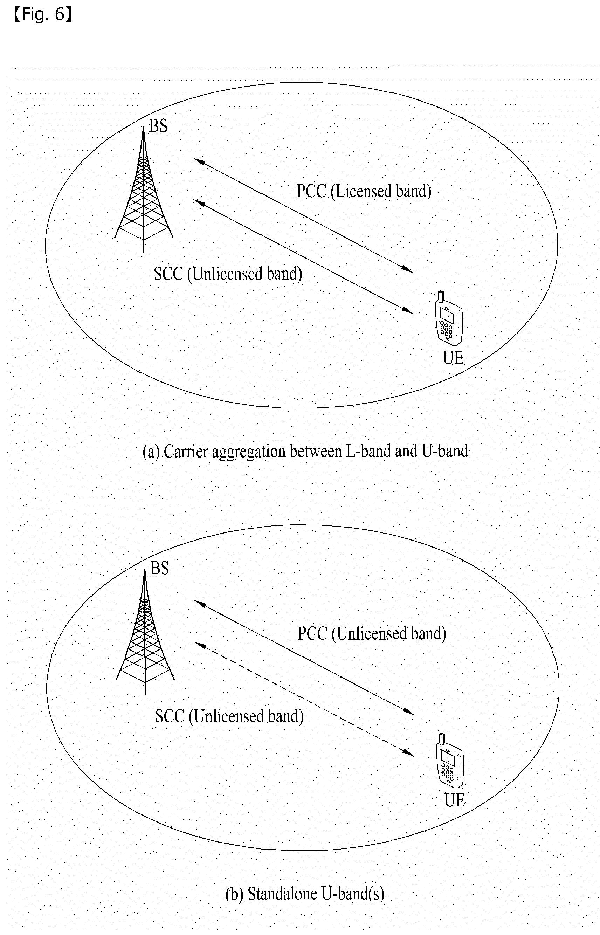

FIG. 6 illustrates an exemplary wireless communication system supporting an unlicensed band applicable to the present disclosure.

In the following description, a cell operating in a licensed band (L-band) is defined as an L-cell, and a carrier of the L-cell is defined as a (DL/LTL) LCC. A cell operating in an unlicensed band (U-band) is defined as a U-cell, and a carrier of the U-cell is defined as a (DL/LTL) UCC. The carrier/carrier-frequency of a cell may refer to the operating frequency (e.g., center frequency) of the cell. A cell/carrier (e.g., CC) is commonly called a cell.

When a BS and a UE transmit and receive signals on carrier-aggregated LCC and UCC as illustrated in FIG. 6(a), the LCC and the UCC may be configured as a primary CC (PCC) and a secondary CC (SCC), respectively. The BS and the UE may transmit and receive signals on one UCC or on a plurality of carrier-aggregated UCCs as illustrated in FIG. 6(b). In other words, the BS and LTE may transmit and receive signals only on UCC(s) without using any LCC. For an SA operation, PRACH, PUCCH, PUSCH, and SRS transmissions may be supported on a UCell.

Signal transmission and reception operations in a U-band as described in the present disclosure may be applied to the afore-mentioned deployment scenarios (unless specified otherwise).

Unless otherwise noted, the definitions below are applicable to the following terminologies used in the present disclosure.

- Channel: a carrier or a part of a carrier composed of a contiguous set of RBs in which a channel access procedure (CAP) is performed in a shared spectrum.
- Channel access procedure (CAP): a procedure of assessing channel availability based on sensing before signal transmission in order to determine whether other communication node(s) are using a channel. A basic sensing unit is a sensing slot with a duration of $T_{sl}$ = 9 us. The BS or the LTE senses the slot during a sensing slot duration. When power detected for at least 4 us within the sensing slot duration is less than an energy detection threshold $X_{thresh}$, the sensing slot duration $T_{sl}$ is be considered to be idle. Otherwise, the sensing slot duration $T_{sl}$ is considered to be busy. CAP may also be called listen before talk (LBT).

- Channel occupancy: transmission(s) on channel(s) from the BS/LTE after a CAP.
- Channel occupancy time (COT): a total time during which the BS/LTE and any BS/UE(s) sharing channel occupancy performs transmission(s) on a channel after a CAP. Regarding COT determination, if a transmission gap is less than or equal to 25 us, the gap duration may be counted in a COT. The COT may be shared for transmission between the BS and corresponding UE(s).
- DL transmission burst: a set of transmissions without any gap greater than 16 us from the BS. Transmissions from the BS, which are separated by a gap exceeding 16 us are considered as separate DL transmission bursts. The BS may perform transmission(s) after a gap without sensing channel availability within a DL transmission burst.
- UL transmission burst: a set of transmissions without any gap greater than 16 us from the UE. Transmissions from the UE, which are separated by a gap exceeding 16 us are considered as separate UL transmission bursts. The UE may perform transmission(s) after a gap without sensing channel availability within a DL transmission burst.
- Discovery burst: a DL transmission burst including a set of signal(s) and/or channel(s) confined within a window and associated with a duty cycle. The discovery burst may include transmission(s) initiated by the BS, which includes a PSS, an SSS, and a cell-specific RS (CRS) and further includes a non-zero power CSI-RS. In the NR system, the discover burst includes may include transmission(s) initiated by the BS, which includes at least an SS/PBCH block and further includes a CORESET for a PDCCH scheduling a PDSCH carrying SIB 1, the PDSCH carrying SIB1, and/or a non-zero power CSI-RS.

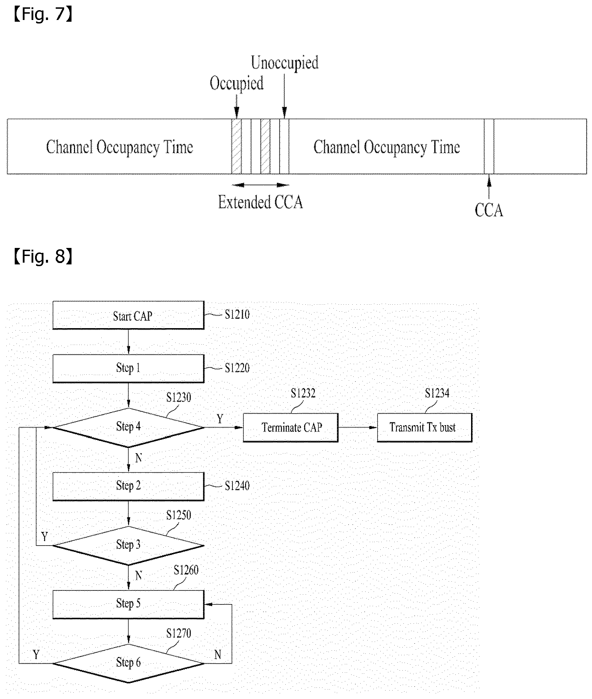

FIG. 7 illustrates a resource occupancy method in a U-band. According to regional regulations for U-bands, a communication node in the U-band needs to determine whether a channel is used by other communication node(s) before transmitting a signal. Specifically, the communication node may perform carrier sensing (CS) before transmitting the signal so as to check whether the other communication node(s) perform signal transmission. When the other communication node(s) perform no signal transmission, it is said that clear channel assessment (CCA) is confirmed. When a CCA threshold is predefined or configured by higher layer signaling (e.g., RRC signaling), the communication node may determine that the channel is busy if the detected channel energy is higher than the CCA threshold. Otherwise, the communication node may determine that the channel is idle. The Wi-Fi standard (802.11ac) specifies a CCA threshold of -62 dBm for non-Wi-Fi signals and a CCA threshold of -82 dBm for Wi-Fi signals. When it is determined that the channel is idle, the communication node may start the signal transmission in a UCell. The sires of processes described above may be referred to as Listen-Before-Talk (LBT) or a channel access procedure (CAP). The LBT, CAP, and CCA may be interchangeably used in this document.

Specifically, for DL reception/LTL transmission in a U-band, at least one of the following CAP methods to be described below may be employed in a wireless communication system according to the present disclosure.

DL Signal Transmission Method in U-band

The BS may perform one of the following U-band access procedures (e.g., CAPs) for DL signal transmission in a U-band.

(1) Type 1 DL CAP Method

In the Type 1 DL CAP, the length of a time duration spanned by sensing slots sensed to be idle before transmission(s) may be random. The Type 1 DL CAP may be applied to the following transmissions:

- Transmission(s) initiated by the BS including (i) a unicast PDSCH with user plane data or (ii) a unicast PDCCH scheduling user plane data in addition to the unicast PDSCH with user plane data, or
- Transmission(s) initiated by the BS including (i) a discovery burst only or (ii) a discovery burst multiplexed with non-unicast information.

FIG. 8 is a flowchart illustrating CAP operations performed by a BS to transmit a DL signal in a U-band.

Referring to FIG. 8, the BS may sense whether a channel is idle for sensing slot durations of a defer duration Ta. Then, if a counter N is zero, the BS may perform transmission (S1234). In this case, the BS may adjust the counter N by sensing the channel for additional sensing slot duration(s) according to the following steps:

Step 1) (S1220) The BS sets N to $N_{init}$ (N = $N_{init}$), where $N_{init}$ is a random number uniformly distributed between 0

and CW$_p$. Then, step 4 proceeds.

Step 2) (S1240) If N>0 and the BS determines to decrease the counter, the BS sets N to N-1 (N=N-1).

Step 3) (S1250) The BS senses the channel for the additional sensing slot duration. If the additional sensing slot duration is idle (Y), step 4 proceeds. Otherwise (N), step 5 proceeds.

Step 4) (S1230) If N=0 (Y), the BS terminates the CAP (S1232). Otherwise (N), step 2 proceeds.

Step 5) (S1260) The BS senses the channel until either a busy sensing slot is detected within an additional defer duration T$_d$ or all the slots of the additional defer duration T$_d$ are detected to be idle.

Step 6) (S1270) If the channel is sensed to be idle for all the slot durations of the additional defer duration T$_d$ (Y), step 4 proceeds. Otherwise (N), step 5 proceeds.

Table 5 shows that m$_p$, a minimum contention window (CW), a maximum CW, a maximum channel occupancy time (MCOT), and an allowed CW size, which are applied to the CAP, vary depending on channel access priority classes.

[Table 5]

| Channel Access Priority Class ($p$) | $m_p$ | $CW_{min,p}$ | $CW_{max,p}$ | $T_{mcotp}$ | allowed $CW_p$ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

The defer duration T$_d$ is configured in the following order: duration T$_f$(16 us) + m$_p$ consecutive sensing slot durations T$_{sl}$ (9 us). Tf includes the sensing slot duration T$_{sl}$ at the beginning of the 16-us duration.

The following relationship is satisfied: $CW_{min,p} <= CW_p <= CW_{max,p}$. CW$_p$ may be initially configured by CW$_p$ = $CW_{min,p}$ and updated before step 1 based on HARQ-ACK feedback (e.g., ACK or NACK) for a previous DL burst (e.g., PDSCH) (CW size update). For example, CW$_p$ may be initialized to $CW_{min,p}$ based on the HARQ-ACK feedback for the previous DL burst. Alternatively, CW$_p$ may be increased to the next highest allowed value or maintained as it is.

(2) Type 2 DL CAP Method

In the Type 2 DL CAP, the length of a time duration spanned by sensing slots sensed to be idle before transmission(s) may be determined. The Type 2 DL CAP is classified into Type 2A/2B/2C DL CAPs.

The Type 2A DL CAP may be applied to the following transmissions. In the Type 2A DL CAP, the BS may perform transmission immediately after the channel is sensed to be idle at least for a sensing duration T$_{short\_dl}$ = 25 us. Here, T$_{short\_dl}$ includes the duration Tf (=16 us) and one sensing slot duration immediately after the duration T$_f$, where the duration T$_f$ includes a sensing slot at the beginning thereof.

- Transmission(s) initiated by the BS including (i) a discovery burst only or (ii) a discovery burst multiplexed with non-unicast information, or
- Transmission(s) by the BS after a gap of 25 us from transmission(s) by the UE within a shared channel occupancy.

The Type 2B DL CAP is applicable to transmission(s) performed by the BS after a gap of 16 us from transmission(s) by the UE within a shared channel occupancy time. In the Type 2B DL CAP, the BS may perform transmission immediately after the channel is sensed to be idle for Tf =16 us. Tf includes a sensing slot within 9 us from the end of the duration. The Type 2C DL CAP is applicable to transmission(s) performed by the BS after a maximum of 16 us from transmission(s) by the UE within the shared channel occupancy time. In the Type 2C DL CAP, the BS does not perform channel sensing before performing transmission.

UL Signal Transmission Method in U-band

The LTE may perform a Type 1 or Type 2 CAP for UL signal transmission in a U-band. In general, the UE may perform the CAP (e.g., Type 1 or Type 2) configured by the BS for UL signal transmission. For example, a UL grant scheduling PUSCH transmission (e.g., DCI formats 0_0 and 0_1) may include CAP type indication information for the UE.

(1) Type 1 LTL CAP Method

In the Type 1 LTL CAP, the length of a time duration spanned by sensing slots sensed to be idle before transmission(s) is random. The Type 1 UL CAP may be applied to the following transmissions.

- PUSCH/SRS transmission(s) scheduled and/or configured by the BS
- PUCCH transmission(s) scheduled and/or configured by the BS
- Transmission(s) related to a Random Access Procedure (RAP)

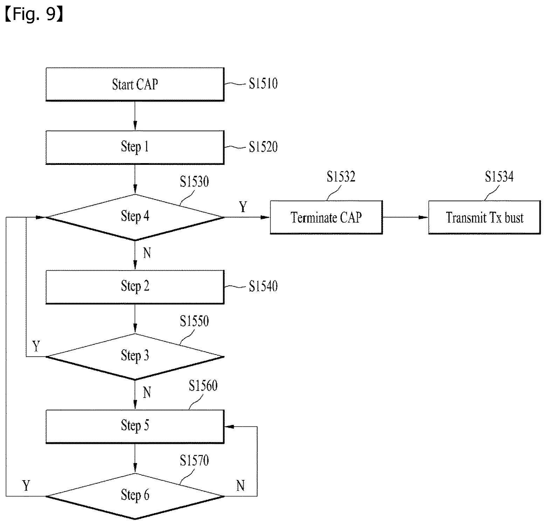

FIG. 9 is a flowchart illustrating Type 1 CAP operations performed by a LTE to transmit a UL signal.
Referring to FIG. 9, the LTE may sense whether a channel is idle for sensing slot durations of a defer duration Ta. Then, if a counter N is zero, the LTE may perform transmission (S1534). In this case, the LTE may adjust the counter N by sensing the channel for additional sensing slot duration(s) according to the following steps:

Step 1) (S1520) The UE sets N to $N_{init}$ (N = $N_{init}$), where $N_{init}$ is a random number uniformly distributed between 0 and $CW_p$. Then, step 4 proceeds.
Step 2) (S1540) If N>0 and the UE determines to decrease the counter, the UE sets N to N-1 (N=N-1).
Step 3) (S1550) The LTE senses the channel for the additional sensing slot duration. If the additional sensing slot duration is idle (Y), step 4 proceeds. Otherwise (N), step 5 proceeds.
Step 4) (S1530) If N=0 (Y), the UE terminates the CAP (S1532). Otherwise (N), step 2 proceeds.
Step 5) (S1560) The LTE senses the channel until either a busy sensing slot is detected within an additional defer duration Td or all the slots of the additional defer duration Td are detected to be idle.
Step 6) (S1570) If the channel is sensed to be idle for all the slot durations of the additional defer duration Td (Y), step 4 proceeds. Otherwise (N), step 5 proceeds.

Table 6 shows that $m_p$, a minimum CW, a maximum CW, an MCOT, and an allowed CW size, which are applied to the CAP, vary depending on channel access priority classes.

[Table 6]

| Channel Access Priority Class ($p$) | $m_p$ | $CW_{min,p}$ | $CW_{max,p}$ | $T_{ulmcot,p}$ | allowed $CW_p$ sizes |
|---|---|---|---|---|---|
| 1 | 2 | 3 | 7 | 2 ms | {3 7} |
| 2 | 2 | 7 | 15 | 4 ms | {7,15} |
| 3 | 3 | 15 | 1023 | 6ms or 10 ms | {15,31,63,127,255,511,1023} |
| 4 | 7 | 15 | 1023 | 6ms or 10 ms | {15,31,63,127,255,511,1023} |

The defer duration $T_d$ is configured in the following order: duration $T_f$(16 us) + $m_p$ consecutive sensing slot durations $T_{sl}$ (9 us). Tf includes the sensing slot duration $T_{sl}$ at the beginning of the 16-us duration.
The following relationship is satisfied: $CW_{min,p} <= CW_p <= CW_{max,p}$. $CW_p$ may be initially configured by $CW_p$ = $CW_{min,p}$ and updated before step 1 based on an explicit/implicit reception response for a previous UL burst (e.g., PUSCH) (CW size update). For example, $CW_p$ may be initialized to $CW_{min,p}$ based on the explicit/implicit reception response for the previous UL burst. Alternatively, $CW_p$ may be increased to the next highest allowed value or maintained as it is.

(2) Type 2 LTL CAP Method

In the Type 2 LTL CAP, the length of a time duration spanned by sensing slots sensed to be idle before transmission(s) may be determined. The Type 2 UL CAP is classified into Type 2A/2B/2C UL CAPs. In the Type 2A UL CAP, the UE may perform transmission immediately after the channel is sensed to be idle at least for a sensing duration $T_{short\_dl}$ = 25 us. Here, $T_{short\_dl}$ includes the duration Tf (=16 us) and one sensing slot duration immediately after the duration $T_f$. In the Type 2A UL CAP, Tf includes a sensing slot at the beginning thereof. In the Type 2B UL CAP, the UE may perform transmission immediately after the channel is sensed to be idle for the sensing duration Tf =16 us. In the Type 2B UL CAP, Tf includes a sensing slot within 9 us from the end of the duration. In the Type 2C LTL CAP, the LTE does not perform channel sensing before performing transmission.

RB Interlace

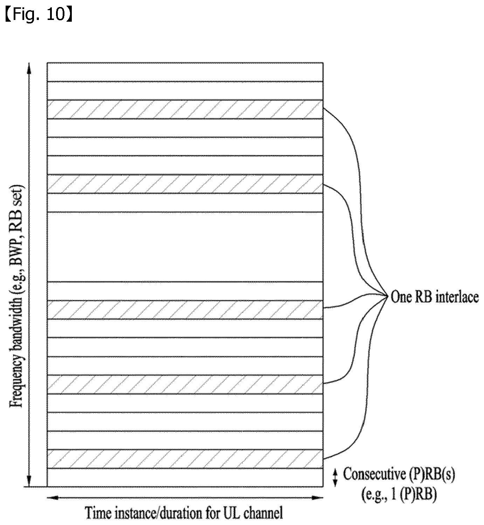

FIG. 10 illustrates an RB interlace. In a shared spectrum, a set of inconsecutive RBs (at the regular interval) (or a single RB) in the frequency domain may be defined as a resource unit used/allocated to transmit a LTL (physical) channel/signal in consideration of regulations on occupied channel bandwidth (OCB) and power spectral density (PSD). Such a set of inconsecutive RBs is defined as the RB interlace (or interlace) for convenience.

Referring to FIG. 10, a plurality of RB interlaces (interlaces) may be defined in a frequency bandwidth. Here, the frequency bandwidth may include a (wideband) cell/CC/BWP/RB set, and the RB may include a PRB. For example, interlace #m∈{0, 1, ..., M-1} may consist of (common) RBs {m, M+m, 2M+m, 3M+m, ...}, where M represents the number of interlaces. A transmitter (e.g., LTE) may use one or more interlaces to transmit a signal/channel. The signal/channel may include a PUCCH or PUSCH.

## 2. Interlace Structure and Allocation in High Frequency Band

The above description (an NR frame structure, an RACH, a U-band system, etc.) may be applied in combination with methods proposed in the present disclosure, which will be described later, or may be supplemented to clarify the technical features of the methods proposed in the present disclosure.

In addition, the methods to be described later are related to UL transmission and may be equally applied even to a LTL signal transmission method and/or DL signal reception method in the U-band system (U-band) described earlier. It is apparent that modifications or replacements may be made to be suitable for terms, expressions, structures, etc. defined in each system so that the technical idea proposed in the present disclosure may be implemented in the corresponding system.

For example, UL transmission and/or DL reception through the methods to be described later may also be performed in an L-cell and/or a U-cell defined in the U-band system.

In a cellular communication system such as an LTE/NR system, a method of utilizing, for traffic offloading, U-bands, such as 5/6 GHz and 60 GHz bands, as well as a U-band, such as a 2.4 GHz band, which is used mainly by a legacy Wi-Fi system, is under consideration.

As described above, the Wi-Fi standard (802. 11ac) specifies a CCA threshold of - 62 dBm for non-Wi-Fi signals and a CCA threshold of -82 dBm for Wi-Fi signals. In other words, when a signal of a device of a non-Wi-Fi system is received with a power of -62 dBm or more in a specific band, a station (STA) or an access point (AP) of a Wi-Fi system does not perform signal transmission in the specific band.

In the present disclosure, the term "unlicensed band (or U-band)" may be replaced and interchangeably used with "shared spectrum".

In the NR system, various numerologies or SCSs are supported to support various services. For example, when an SCS is 15 kHz, the NR system supports a wide area in traditional cellular bands. When an SCS is 30 kHz/60 kHz, the NR system supports a dense urban area, a lower latency, and a wide carrier bandwidth (BW). When an SCS is 60 kHz or higher, the NR system supports a BW larger than 24.25 GHz to overcome phase noise.

An NR frequency band is defined as two types of frequency ranges, FR1 and FR2. FR1 and FR2 may be configured as in Table 7. FR2 may represent millimeter wave (mmW).

[Table 7]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

A band (e.g., 52.6 GHz to 114.25 GHz bands, especially 71 GHz) higher than FR1 and FR2 bands is referred to as FR4.

The FR4 band may be used as a U-band.

Regarding regulations on U-bands, there is a PSD limit when a certain node transmits signals. For example, in some bands of the FR4 region, a signal satisfying a PSD of 23 dBm/1 MHz should be transmitted. In other bands, a signal satisfying a PSD of 13 dBm/1 MHz should be transmitted. In this situation, the UE needs to increase allowable transmit power by distributively transmitting signals/channels on the frequency axis.

As other regulations on the U-bands, there is an OCB limit when a node transmits signals. For example, when a node transmits signals, there is a restriction that 70% of a defined system BW should be occupied. If the system BW is 400 MHz, a node that tries to transmit signals should occupy more than 280 MHz, which is 70% of 400 MHz.

As one method for satisfying the above-mentioned restriction, the above-described RB interlace structure may be used for LTL channel transmission. Table 8 shows the total number of PRBs for each SCS and each BW defined in the FR2 region

[Table 8]

| SCS (kHz) | 50 MHz | 100 MHz | 200 MHz | 400 MHz |
|---|---|---|---|---|
| | $N_{RB}$ | $N_{RB}$ | $N_{RB}$ | $N_{RB}$ |
| 60 | 66 | 132 | 264 | N.A |
| 120 | 32 | 66 | 132 | 264 |

Table 9 shows the expected total number of PRBs when an SCS increases to 240 kHz, 480 kHz, and 960 kHz and when BW increases to 800 MHz, 1600 MHz, and 2000 MHz, based on Table 8.

[Table 9]

| SCS (kHz) | 50 MHz | 100 MHz | 200 MHz | 400 MHz | 800 MHz | 1600 MHz | 2000 MHz |
|---|---|---|---|---|---|---|---|
| | $N_{RB}$ | $N_{RB}$ | $N_{RB}$ | $N_{RB}$ | $N_{RB}$ | $N_{RB}$ | $N_{RB}$ |
| 60 | 66 | 132 | 264 | N.A | N.A | N.A | N.A |
| 120 | 32 | 66 | 132 | 264 | N.A | N.A | N.A |
| 240 | 16 | 32 | 66 | 132 | 264 | N.A | N.A |
| 480 | 8 | 16 | 32 | 66 | 132 | 264 | N.A |
| 960 | 4 | 8 | 16 | 32 | 66 | 132 | 160 |

Additionally, the number of PRBs determined for simulation is shown in Table 10.

[Table 10]

| SCS (kHz) | 50 MHz | 100 MHz | 200 MHz | 400 MHz | 800 MHz | 1600 MHz | 2000 MHz |
|---|---|---|---|---|---|---|---|
| | $N_{RB}$ | $N_{RB}$ | $N_{RB}$ | $N_{RB}$ | $N_{RB}$ | $N_{RB}$ | $N_{RB}$ |
| 120 | 32 | 64 | 128 | 256 | N.A | N.A | N.A |
| 240 | 16 | 32 | 64 | 128 | 256 | N.A | N.A |
| 480 | 8 | 16 | 32 | 64 | 128 | 256 | N.A |
| 960 | 4 | 8 | 16 | 32 | 64 | 128 | 160 |

If the number of PRBs for each SCS and each BW is defined as in Table 9 and/or Table 10, it may be desirable to modify the RB interlace structure that has been introduced in legacy NR and NR-U.

Meanwhile, although the final number of PRBs for each SCS and each BW may be different from that of Table 8 and/or Table 9, methods proposed below may be extended and applied based on the determined final number of PRBs.

2.1. Interlaced structure design for above 52.6 GHz

In the FR4 region (e.g., a band of above 52.6 GHz), a maximum transmit power that one node is capable of maximally transmitting is also used as regulations, in addition to the above-described PSD regulations and OCB regulations. As an example, one node may use power of up to 40 dB. Considering the PSD regulations and the maximum power regulations, a maximum power that may be transmitted in one PRB may be determined according to each SCS. The maximum number of PRBs that does not exceed the maximum power limit while transmitting maximum power in each PRB according to each SCS may be calculated as shown in Table 11 and Table 12. Table 11 shows the number of PRBs when the PSD regulations are 23 dBm/1 MHz, and Table 12 shows the number of PRBs when the PSD regulations are 13 dBm/1 MHz.

[Table 11]

| SCS (kHz) | 1 PRB BW (MHz) | 1 PRB TX power (dBm) | # of PRBs | Total Tx power (dBm) |
|---|---|---|---|---|
| 120 | 1.44 | 24.58 | 34 | 39.89 |
| | | | 35 | 40.02 → 40 |
| 240 | 2.88 | 27.59 | 17 | 39.89 |
| | | | 18 | 40.14 → 40 |
| 480 | 5.76 | 30.60 | 8 | 39.63 |
| | | | 9 | 40.14 → 40 |
| 960 | 11.52 | 33.61 | 4 | 39.63 |
| | | | 5 | 40.60 → 40 |

[Table 12] [194]

| SCS (kHz) | 1 PRB BW (MHz) | 1 PRB TX power (dBm) | # of PRBs | Total Tx power (dBm) |
|---|---|---|---|---|
| 120 | 1.44 | 1458 | 264 | 38.80 |
| | | | - | - |
| 240 | 2.88 | 17.59 | 174 | 39.99 |
| | | | 175 | 40.02 → 40 |
| 480 | 5.76 | 20.60 | 87 | 39.99 |
| | | | 88 | 40.04 → 40 |
| 960 | 11.52 | 23.61 | 43 | 39.95 |
| | | | 44 | 40.04 → 40 |

Referring to Tables 11 and 12, when the number of PRBs in an interlace reaches a certain number, a LTE is incapable of increasing transmit (TX) power any longer due to a total TX power limit. As an example, considering that the SCS is 120 kHz in Table 11, when the number of PRBs included in the interlace is 34, the total TX power is 39.89 dBm, and when the number of PRBs included in the interlace is 35, the total TX power is 40 dBm. Characteristically, when the number of PRBs included in the interlace is 34, the maximum TX power (i.e., 24.58 dBm) for each PRB may be configured. If the number of PRBs included in the interlace is 35, the TX power for PRB is reduced (i.e., 24.55 dBm) relative to the maximum TX power (i.e., 24.58 dBm). An interlace structure should be designed in consideration of a trade-off between the total power and a multiplexing capability (in the frequency domain) between UEs. Therefore, principles for designing the interlace structure in the FR4 band may be configured as follows.

1. The number (i.e., N) of PRBs per interlace is configured to be halved when an SCS is doubled within the same nominal band.
2. The number of interlaces (i.e., M) is configured to be the same regardless of the SCS value in the same nominal band. That is, a PRB interval within an interlace is configured to be the same regardless of the SCS value.

The following methods may be proposed based on the above principles.

[Method 1: Method of configuring a single interlace by configuring the minimum number of PRBs that allows the UE to transmit a UL channel (e.g., a PUSCH/PUCCH), based on the maximum power (e.g., 40 dBm) usable for all PRBs constituting the interlace]

Table 13 shows the number M of interlaces, the number (i.e., N) of PRBs per interlace, an OCB, and a total TX power per single interlace, according to a nominal BW and an SCS, when Method 1 is applied. In this case, PSD requirements have been applied based on 23 dBm/1 MHz of Table 11 above.

[Table 13]

| SCS (kHz) | | Nominal BW | | | | |
|---|---|---|---|---|---|---|
| | | 2000 MHz | 1600 MHz | 800 MHz | 400 MHz | 200 MHz |
| 120 | # of PRBs | - | - | - | 256 or 264 | 128 or 132 |
| | M (# of interlace) | - | - | - | 7 | 3 |
| | N (# of PRB s/interlace) | - | - | - | 36 or 37 or 38 | 42 or 43 or 44 |
| | OCB % (based on nominal BW) | - | - | - | 88.56% when N=36 | 89.28% when N=42 |
| | Total TX power (dBm) per single interlace | - | - | - | 40 | 40 |
| 240 | # of PRBs | - | - | 256 or 264 | 128 or 132 | 64 or 66 |
| | M (# of interlace) | - | - | 14 | 7 | 3 |
| | N (# of PRB s/interlace) | - | - | 18 or 19 | 18 or 19 | 21 or 22 |
| | OCB % (based on nominal BW) | - | - | 86.04% when N=18 | 86.40% when N=18 | 87.84% when N=21 |
| | Total TX power (dBm) per single interlace | - | - | 40 | 40 | 40 |
| 480 | # of PRBs | - | 256 or 264 | 128 or 132 | 64 or 66 | 32 |
| | M (# of interlace) | - | 28 | 14 | 7 | 3 |
| | N (# of PRB s/interlace) | - | 9 or 10 | 9 or 10 | 9 or 10 | 10 or 11 |
| | OCB % (based on nominal BW) | - | 81.00% when N=9 | 81.36% when N=9 | 82.08% when N=9 | 80.64% when N=10 |
| | Total TX power (dBm) per single interlace | - | 40 | 40 | 40 | 40 |
| 960 | # of PRBs | 160 | 128 or 132 | 64 or 66 | 32 | 16 |
| | M (# of interlace) | 32 | 25 | 12 | 6 | 3 |
| | N (# of PRB s/interlace) | 5 | 5 or 6 | 5 or 6 | 5 or 6 | 5 or 6 |
| | OCB % (based on nominal BW) | 74.30% when N=5 | 72.72% when N=5 | 70.56% when N=5 | 72.00% when N=5 | 74.88% when N=5 |
| | Total TX power (dBm) per single interlace | 40 | 40 | 40 | 40 | 40 |

In Table 13, # of PRB indicates the total number of PRBs according to the SCS value when the nominal BW is determined. In this case, # of PRB is denoted as two values because both Table 9 and Table 10 have been referred to.
The number of interlaces and the number of PRBs per interlace, represented in Table 14, may be calculated as follows. For example, in the case of an SCS of 480 kHz, in order to use a total power of 40 dBm on one interlace, PRBs greater than or equal to 9 should constitute one interlace as shown in Table 11. Therefore, when the nominal BW is 1600 MHz (i.e., when the number of PRBs is 256 or 264), at least 9 PRBs should be included per interlace. Therefore, the total number of interlaces may be 28 (i.e., 256/9 = 28.4444). That is, a total of 9 PRBs {PRB index k, PRB index k+28, PRB index k+28*2, ..., PRB index k+28*8} may be included with respect to a specific interlace index k (in this case, 0≤k<28). However, since 28*9=252, if the total number of PRBs is 256, 4 interlace indexes (256-252 = 4) include PRBs up to PRB indexes k+28*9, and if the total number of PRBs is 264, 12 interlace indexes (264-252 = 12) include PRBs up to PRB indexes k+28*9, so that a total of 10 PRBs may be included per interlace with respect to each case.
Method 1 may be appreciated as applying the two principles mentioned above thereto. Principle 1 is that if the SCS is doubled within the same nominal band, the number of PRBs per interlace is halved. In Method 1, when the nominal band is 200 MHz, the number (i.e., N) of PRBs per interlace is set to 42, 43 or 44 in the case of an SCS of 120 kHz and to 21 or 22 in the case of an SCS of 240 kHz. Principle 2 is that the number (i.e., M) of interlaces is configured to be the same regardless of the SCS value within the same nominal band. In Method 1, when the nominal BW is 200 MHz, the number of interlaces is always set to 3 regardless of the SCS value.

If the interlace is configured as in Method 1, there is an advantage that OCB requirements are satisfied in all cases. In addition, there is an advantage that one interlace may always use the maximum TX power. However, since the number of interlaces is not the same according to the nominal BW when a specific SCS value is determined, implementation complexity may increase.

[Method 2: A method of configuring one interlace by configuring the maximum number of PRBs that allows the UE to transmit a UL channel (e.g., PUSCH/PUCCH), based on the maximum power that may be transmitted in each PRB constituting the interlace]

Table 14 shows the number M of interlaces, the number (i.e., N) of PRBs per interlace, an OCB, and a total TX power per single interlace, according to a nominal BW and an SCS, when Method 2 is applied. In this case, the PSD requirements have been applied based on 23 dBm/1 MHz of Table 11 above.

[Table 14]

| SCS (kHz) | | Nominal BW | | | | |
|---|---|---|---|---|---|---|
| | | 2000 MHz | 1600 MHz | 800 MHz | 400 MHz | 200 MHz |
| 120 | # of PRBs | - | - | - | 256 or 264 | 128 or 132 |
| | M (# of interlace) | - | - | - | 8 | 4 |
| | N (# of PRB s/interlace) | - | - | - | 32 or 33 | 32 or 33 |
| | OCB % (based on nominal BW) | - | - | - | 89.64% when N=32 | 90.00% when N=32 |
| | Total TX power (dBm) per single interlace | - | - | - | {N=32, 39.64} {N=33, 39.77} | {N=32, 39.64} {N=33, 39.77} |
| 240 | # of PRBs | - | - | 256 or 264 | 128 or 132 | 64 or 66 |
| | M (# of interlace) | - | - | 16 | 8 | 4 |
| | N (# of PRB s/interlace) | - | - | 16 or 17 | 16 or 17 | 16 or 17 |
| | OCB % (based on nominal BW) | - | - | 86.76% when N=16 | 87.12% when N=16 | 87.84% when N=16 |
| | Total TX power (dBm) per single interlace | - | - | {N=16, 39.64} {N=17, 39.89} | {N=16, 39.64} {N=17, 39.89} | {N=16, 39.64} {N=17, 39.89} |
| 480 | # of PRBs | - | 256 or 264 | 128 or 132 | 64 or 66 | 32 |
| | M (# of interlace) | - | 36 | 18 | 9 | 4 |
| | N (# of PRBs/interlace) | - | 7 or 8 | 7 or 8 | 7 or 8 | 8 |
| | OCB % (based on nominal BW) | - | 78.12 when N=7 | 78.48% when N=7 | 79.20% when N=7 | 83.52% when N=8 |
| | Total TX power (dBm) per single interlace | - | {N=7, 39.06} {N=8, 39.64} | {N=7, 39.06} {N=8, 39.64} | {N=7, 39.06} {N=8, 39.64} | {N=8, 39.64} |

(continued)

| SCS (kHz) | | Nominal BW | | | | |
|---|---|---|---|---|---|---|
| | | 2000 MHz | 1600 MHz | 800 MHz | 400 MHz | 200 MHz |
| 960 | # of PRBs | 160 | 128 or 132 | 64 or 66 | 32 | 16 |
| | M (# of interlace) | 40 | 42 | 21 | 8 | 4 |
| | N (# of PRBs/interlace) | 4 | 3 or 4 | 3 or 4 | 4 | 4 |
| | OCB % (based on nominal BW) | 69.70% when N=4 | 61.20% when N=3 | 61.92% when N=3 | 72.00% when N=4 | 74.88% when N=4 |
| | Total TX power (dBm) per single interlace | {N=4, 39.64} | {N=3, 38.39} {N=4, 39.64} | {N=3, 38.39} {N=4, 39.64} | {N=4, 39.64} | {N=4, 39.64} |

In Table 14, # of PRB indicates the total number of PRBs according to the SCS value when the nominal BW is determined. Even in this case, # of PRB is denoted as two values because both Table 9 and Table 10 have been referred to.

The number of interlaces and the number of PRBs per interlace, represented in Table 14, may be calculated as follows. For example, in the case of an SCS of 480 kHz, a maximum power usable in each PRB is 30.60 dBm (refer to Table 11). To use the maximum power in each PRB, 8 or fewer PRBs should constitute one interlace. Therefore, when the nominal BW is 1600 MHz (i.e., when the number of PRBs is 256 or 264), a maximum of 8 PRBs should be included per interlace. Therefore, the total number of interlaces may be 36 (i.e., 256/7 = 36.57). That is, a total of 7 PRBs {PRB index k, PRB index k+36, PRB index k+36*2, ..., PRB index k+36*6} may be included with respect to a specific interlace index k (in this case, 0≤k<28). However, since 36*7=252, if the total number of PRBs is 256, 4 interlace indexes (256-252 = 4) includes PRBs up to PRB indexes k+36*8, and if the total number of PRBs is 264, 12 interlace indexes (264-252 = 12) includes PRBs up to PRB indexes k+36*8, so that a total of 8 PRBs may be included per interlace with respect to each case.

Method 1 may be appreciated as applying the two principles mentioned above thereto. Principle 1 is that if the SCS is doubled within the same nominal band, the number of PRBs per interlace is halved. In Method 1, when the nominal band is 200 MHz, the number (i.e., N) of PRBs per interlace is set to 32 or 33 in the case of an SCS of 120 kHz and to 16 or 17 in the case of an SCS of 240 kHz. In this case, when the number of PRBs per interlace is an odd number, if the SCS is doubled and thus if the number of PRBs per interlace is halved, the number of PRBs per interlace is not derived as an integer. If the number of PRBs per interlace is not an integer number, the number of PRBs per interlace may be set to an integer number by discarding decimal places. Principle 2 is that the number (i.e., M) of interlaces is configured to be the same regardless of the SCS value within the same nominal band. In Method 2, when the nominal BW is 200 MHz, the number of interlaces is always set to 3 regardless of the SCS value.

If the interlace is configured as in Method 2, there is an advantage that the maximum TX power is always used for each PRB constituting the interlace. However, from the viewpoint of a UE transmitting one interlace, the maximum TX power may not be used. In addition, in certain cases, the OCB requirements may not be satisfied. Furthermore, since the number of interlaces is not the same according to the nominal BW when a specific SCS value is determined, implementation complexity may increase.

[Method 3: Method of configuring the same number (i.e., M) of interlaces included in the nominal BW for each nominal BW regardless of the SCS value]

In Methods 1 and 2, even if the nominal BW is the same, there is a case in which the number of interlaces is differently configured according to the SCS value. If the number of interlaces varies according to the SCS value when the nominal BW is the same, implementation complexity increases because different indication schemes should be used for frequency domain resource assignment. Therefore, in order to solve this disadvantage, when the nominal BW is the same, the number of interlaces may be configured to be the same regardless of the SCS value. Specific embodiments are described in the following options.

If interlaces are configured as in Method 3, since the number of interlaces is always defined as the same value regardless of the SCS value when the nominal BW is determined, this is advantageous in that a method of indicating the interlaces using a frequency domain resource assignment (FDRA) field may be implemented in the same method in one nominal BW.

Option 3-1, Configuring the same number of interlaces in the nominal BW based on Method 1

Table 15 shows the number M of interlaces, the number (i.e., N) of PRBs per interlace, an OCB, and a total TX power per single interlace, according to a nominal BW and an SCS, when Method 3 based on Method 1 is applied. In this case, the PSD requirements have been applied based on 23 dBm/1 MHz of Table 11 above.

[Table 15]

| SCS (kHz) | | Nominal BW | | | | |
|---|---|---|---|---|---|---|
| | | 2000 MHz | 1600 MHz | 800 MHz | 400 MHz | 200 MHz |
| 120 | # of PRBs | - | - | - | 256 or 264 | 128 or 132 |
| | M (# of interlace) | - | - | - | 6 | 3 |
| | N (# of PRBs/interlace) | | | | 42 or 43 or 44 | 42 or 43 or 44 |
| | OCB % (based on nominal BW) | - | - | - | 88.92% when N=42 | 89.28% when N=42 |
| | Total TX power (dBm) per single interlace | - | - | - | 40 | 40 |
| 240 | # of PRBs | - | - | 256 or 264 | 128 or 132 | 64 or 66 |
| | M (# of interlace) | - | - | 12 | 6 | 3 |
| | N (# of PRBs/interlace) | - | - | 21 or 22 | 21 or 22 | 21 or 22 |
| | OCB % (based on nominal BW) | - | - | 86.76% when N=21 | 87.12% when N=21 | 87.84% when N=21 |
| | Total TX power (dBm) per single interlace | - | - | 40 | 40 | 40 |
| 480 | # of PRBs | - | 256 or 264 | 128 or 132 | 64 or 66 | 32 |
| | M (# of interlace) | - | 24 | 12 | 6 | 3 |
| | N (# of PRBs/interlace) | - | 10 or 11 | 10 or 11 | 10 or 11 | 10 or 11 |
| | OCB % (based on nominal BW) | - | 78.12% when N=10 | 78.48% when N=10 | 79.20% when N=10 | 80.64% when N=10 |
| | Total TX power (dBm) per single interlace | - | 40 | 40 | 40 | 40 |
| 960 | # of PRBs | 160 | 128 or 132 | 64 or 66 | 32 | 16 |
| | M (# of interlace) | 32 | 24 | 12 | 6 | 3 |
| | N (# of PRBs/interlace) | 5 | 5 or 6 | 5 or 6 | 5 or 6 | 5 or 6 |
| | OCB % (based on nominal BW) | 74.30% when N=5 | 69.84% when N=5 | 70.56% when N=5 | 72.00% when N=5 | 74.88% when N=5 |
| | Total TX power (dBm) per single interlace | 40 | 40 | 40 | 40 | 40 |

Referring to Table 15, Option 3-1 may be appreciated as applying the two principles mentioned above thereto. Principle 1 is that if the SCS is doubled within the same nominal band, the number of PRBs per interlace is halved. As an example, when the nominal band is 200 MHz, the number (i.e., N) of PRBs per interlace is set to 42, 43, or 44 in the case of an SCS of 120 kHz and to 21 or 22 in the case of an SCS of 240 kHz. Principle 2 is that the number (i.e., M) of interlaces is configured to be the same regardless of the SCS value within the same nominal band. As example, when the nominal BW is 200 MHz, the number of interlaces is always set to 3 regardless of the SCS value. Additionally, in Method 3, when the SCS value is constant, the number of PRBs per interlace is configured to be the same even if the nominal BW varies. When the SCS value is constant, if the nominal BW value is increased to L times (except for 2000 MHz), the number of interlaces is configured to be increased to L times.

Based on Option 3-1, when the nominal BW value is set to {2000 MHz, 1600 MHz, 800 MHz, 400 MHz, 200 MHz}, the number of interlaces is defined as {32, 24, 12, 6, 3}, respectively. In addition, when the SCS value is set to {120 kHz, 240 kHz, 480 kHz, 960 kHz}, the number of PRBs per interlace may be defined as {42, 43, or 44, 21 or 22, 10 or 11, 5 or 6}, respectively.

Meanwhile, when an SCS of 960 kHz is applied to a BW of 1600 MHz, the OCB requirements may not be satisfied because the number of interlaces is 24. Accordingly, when an SCS of 960 kHz is applied to a BW of 1600, the number of interlaces may be set to 25. When the number of interlaces is 25, the OCB becomes 72%, which satisfies the OCB requirements (70% or more). Alternatively, an SCS of 960 kHz may be configured not to be used in a BW of 1600 MHz.

Option 3-2. Configuring the same number of interlaces per nominal BW based on Method 2

Table 16 shows the number M of interlaces, the number (i.e., N) of PRBs per interlace, an OCB, and a total TX power per single interlace, according to a nominal BW and an SCS, when Method 3 based on Method 2 is applied. In this case, the PSD requirements have been applied based on 23 dBm/1 MHz of Table 11 above.

[Table 16]

| SCS (kHz) | | Nominal BW | | | | |
|---|---|---|---|---|---|---|
| | | 2000 MHz | 1600 MHz | 800 MHz | 400 MHz | 200 MHz |
| 120 | # of PRBs | - | - | - | 256 or 264 | 128 or 132 |
| | M (# of interlace) | - | - | - | 8 | 4 |
| | N (# of PRB s/interlace) | - | - | - | 32 or 33 | 32 or 33 |
| | OCB % (based on nominal BW) | - | - | - | 89.64% when N=32 | 90.00% when N=32 |
| | Total TX power (dBm) per single interlace | - | - | - | {N=32, 39.64} {N=33, 39.77} | {N=32, 39.64} {N=33, 39.77} |
| 240 | # of PRBs | - | - | 256 or 264 | 128 or 132 | 64 or 66 |
| | M (# of interlace) | - | - | 16 | 8 | 4 |
| | N (# of PRB s/interlace) | - | - | 16 or 17 | 16 or 17 | 16 or 17 |
| | OCB % (based on nominal BW) | - | - | 86.76% N=16 | 87.12% N=16 | 87.84% N=16 |
| | Total TX power (dBm) per single interlace | - | - | {N=16, 39.64} {N=17, 39.89} | {N=16, 39.64} {N=17, 39.89} | {N=16, 39.64} {N=17, 39.89} |
| 480 | # of PRBs | - | 256 or 264 | 128 or 132 | 64 or 66 | 32 |
| | M (# of interlace) | - | 32 | 16 | 8 | 4 |
| | N (# of PRB s/interlace) | - | 8 or 9 | 8 or 9 | 8 or 9 | 8 |
| | OCB % (based on nominal BW) | - | 81.00 N=8 | 81.36% N=8 | 82.08% N=8 | 83.52% N=8 |
| | Total TX power (dBm) per single interlace | - | {N=8, 39.64} {N=9, 40} | {N=8, 39.64} {N=9, 40} | {N=8, 39.64} {N=9, 40} | {N=8, 39.64} |

(continued)

| SCS (kHz) | | Nominal BW | | | | |
|---|---|---|---|---|---|---|
| | | 2000 MHz | 1600 MHz | 800 MHz | 400 MHz | 200 MHz |
| 960 | # of PRBs | 160 | 128 or 132 | 64 or 66 | 32 | 16 |
| | M (# of interlace) | 32 | 32 | 16 | 8 | 4 |
| | N (# of PRB s/interlace) | 5 | 4 or 5 | 4 or 5 | 4 | 4 |
| | OCB % (based on nominal BW) | 74.30% N=5 | 69.84% N=4 | 70.56% N=4 | 72.00% N=4 | 74.88% N=4 |
| | Total TX power (dBm) per single interlace | {N=5, 40 } | {N=4, 39.64} {N=5, 40 } | {N=4, 39.64} {N=5, 40 } | {N=4, 39.64} | {N=4, 39.64} |

Referring to Table 15, Option 3-1 may be appreciated as applying the two principles mentioned above thereto. Principle 1 is that if the SCS is doubled within the same nominal band, the number of PRBs per interlace is halved. As an example, when the nominal band is 200 MHz, the number (i.e., N) of PRBs per interlace is set to 332 or 33 in the case of an SCS of 120 kHz and to 16 or 17 in the case of an SCS of 240 kHz. Principle 2 is that the number (i.e., M) of interlaces is configured to be the same regardless of the SCS value within the same nominal band. As example, when the nominal BW is 200 MHz, the number of interlaces is always set to 4 regardless of the SCS value. Additionally, in Method 3, when the SCS value is constant, the number of PRBs per interlace is configured to be the same even if the nominal BW varies. When the SCS value is constant, if the nominal BW value is increased to L times (except for 2000 MHz), the number of interlaces is configured to be increased to L times.

Based on option 3-2, when the nominal BW value is set to {2000 MHz, 1600 MHz, 800 MHz, 400 MHz, 200 MHz}, the number of interlaces is defined as {32, 32, 16, 8, 4}, respectively. In addition, when the SCS value is set to {120 kHz, 240 kHz, 480 kHz, 960 kHz}, the number of PRBs per interlace may be defined as {32 or 33, 16 or 17, 8 or 9, 4 or 5}, respectively.

Meanwhile, when an SCS of 960 kHz is applied to a BW of 1600 MHz, the OCB requirements may not be satisfied because the number of interlaces is 32. Accordingly, when an SCS of 960 kHz is applied to a BW of 1600, the number of interlaces may be set to 33. When the number of interlaces is 33, the OCB becomes 72%, which satisfies the OCB requirements (70% or more). Alternatively, an SCS of 960 kHz may be configured not to be used in a BW of 1600 MHz.

Option 3-3. Method of predefining set corresponding to the number of interlaces per nominal BW

A set corresponding to the number of interlaces per nominal BW may be predefined between the UE and the BS. The set determined by the BS may be configured for the UE in consideration of a trade-off between UE TX power and UE multiplexing capability. The UE may transmit a LTL channel (e.g. a PUSCH/PUCCH) based on the configured number of interlaces.

As an example, the number of interlaces according to the nominal BW may be indicated as shown in Table 17, including the results obtained from Options 3-1 and 3-2. In addition, if the number of interlaces is determined according to an index indicated by the BS, the number of PRBs per interlace may be defined as in a separate table (e.g., Table 15 and/or Table 16) according to the SCS value. The UE may select the number of PRBs per interlace as a preset value according to the SCS value of a corresponding BWP.

[Table 17]

| | Nominal BW | | | | |
|---|---|---|---|---|---|
| Index | 200 MHz | 400 MHz | 800 MHz | 1600 MHz | 2000 MHz |
| 0 | 4 | 8 | 16 | 32 | 32 |
| 1 | 3 | 6 | 12 | 24 | 32 |

(continued)

| | Nominal BW | | | | |
|---|---|---|---|---|---|
| Index | 200 MHz | 400 MHz | 800 MHz | 1600 MHz | 2000 MHz |
| 2 | 2 | 4 | 8 | 16 | 32 |
| 3 | 1 | 2 | 4 | 8 | 16 |
| 4 | 1 | 1 | 2 | 4 | 8 |
| 5 | 1 | 1 | 1 | 2 | 3 |
| 6 | 1 | 1 | 1 | 2 | 4 |

Characteristically, the number of interlaces indicated by index 5 of Table 17 is the number of interlaces capable of being configured when interlaces are configured with the number of PRBs with which the maximum Tx power per PRB may be used based on the PSD requirements of 13 dBm/1 MHz of Table 12. Characteristically, when the number of interlaces is 1, interlaces are not actually configured, and all PRBs of a BWP are occupied by one UE to transmit a UL signal. That is, in this structure, UE multiplexing is not considered in the frequency domain.

In addition, the number of interlaces and/or the number of PRBs per interlace that may be used for UL channel transmission by the UE before the UE enters a connected mode may be preconfigured between the BS and the UE. As an example, index 0 of Table 17 may be used as an interlace structure for the UE before the UE enters the connected mode. After the LTE enters the connected mode, the BS may indicate a new index cell-specifically, UE-group-specifically, or BWP-specifically. If a new index is not indicated, the UE may continue to use a default interlace structure (e.g., index 0).

## 2.2. PUSCH/PDSCH FDRA for above 52.6 GHz

In addition to the interlace structure described in Section 2.1, a PUSCH FDRA method considering PSD requirements and a maximum power limit is proposed as follows.

Table 11 in Section 2.1 shows the case in which the PSD requirements are 23 dBm/1 MHz and the maximum power limit is 40 dBm per node. In a similar area, but as another example, the case in which the PSD requirement is 38 dBm/1 MHz and the maximum power limit is 55 dBm per node may be shown as in Table 18.

[Table 18]

| SCS (kHz) | 1 PRB BW (MHz) | 1 PRB TX power (dBm) | # of PRBs | Total Tx power (dBm) |
|---|---|---|---|---|
| 120 | 1.44 | 39.58 | 34 | 54.89 |
| | | | 35 | 55.02 → 55 |
| 240 | 2.88 | 4259 | 17 | 54.89 |
| | | | 18 | 55.14 → 55 |
| 480 | 5.76 | 45.60 | 8 | 54.63 |
| | | | 9 | 55.14 → 55 |
| 960 | 11.52 | 48.61 | 4 | 54.63 |
| | | | 5 | 55.60 → 55 |

Characteristically, the number of PRBs is equally obtained in Table 11 and Table 18. However, since the corresponding examples are obtained based on the requirements of the European region, the number of PRBs obtained based on the requirements of other regions may be applied to the embodiments of the present disclosure.

In consideration of the PSD requirements and the maximum power limit, the minimum number of PRBs per SCS may be calculated. The BS needs to allocate resources equal to or greater than the calculated number of PRBs in order for the LTE to transmit a PUSCH at the maximum power. In view of this point, the following methods are proposed.

While the following methods are described based on PUSCH transmission of the UE, the methods may equally be applied to PDSCH reception of the UE.

[Method 4: Method of configuring the minimum number of PRBs calculated considering the PSD requirements and the maximum power limit as a minimum scheduling unit and/or a scheduling step size, for PUSCH transmission]

Method 4 is a method of configuring the minimum number of PRBs calculated considering the PSD requirements and the maximum power limit as the minimum scheduling unit for PUSCH transmission. As an example, the minimum scheduling unit per SCS may be shown in Table 19 (based on European band 75 (c1) requirements)

[Table 19]

| SCS (kHz) | # of PRBs |
|---|---|
| 120 | 35 |
| 240 | is |
| 480 | 9 |
| 960 | 5 |

Additionally, a value corresponding to the minimum scheduling unit may be configured as the scheduling step size. PUSCH transmission resources corresponding to the minimum scheduling unit may be allocated to a specific LTE, and PUSCH transmission resources corresponding to a multiple of the minimum scheduling unit may be allocated to other UEs.

The BS may indicate PUSCH transmission resources by a bitmap method (or a resource indicator value (RIV) method) using a DCI field (e.g., an FDRA field). The bit width of the DCI field may vary depending on the SCS value and/or (nominal) BWP size. As an example, when the bitmap method is used and a PUSCH of an SCS of 960 kHz is allocated to a BWP of 2000 MHz (total number of PRBs is 160), since a total of 160 PRBs is divided by 5 PRBs, 32 bits are required for the DCI field. As another example, if the bitmap method is used and a PUSCH of an SCS of 480 kHz is allocated to a BWP of 1600 MHz (total number of PRBs is 264), since 264 PRBs are divided by 9 PRBs, 29 bits (or 30 bits) (264 /9 = 29.33) are needed for the DCI field. If the RIV method is used and a PUSCH of an SCS of 960 kHz is used for a BWP of 2000 MHz (160 PRBs in total), since 528 (= 32 * 33/2) states should be indicated, 10 bits are required for the DCI field.

Additionally, the minimum scheduling unit is maintained at the calculated minimum number of PRBs, and the scheduling step size may be separately configured. In this case, the scheduling step size may be indicated by the BS. The scheduling step size may be preconfigured between the UE and the BS. For example, the scheduling step size may be configured in units of 1 PRB. This method has the advantage of enabling more flexible scheduling.

[Method 5: Method in which the BS indicates the minimum scheduling unit and/or the scheduling step size, for PUSCH transmission, through higher layer signaling (or DCI, etc.)]

Method 4 has a disadvantage in that a different configuration is required for each region/band because requirements, etc. are different according to regions/bands. Therefore, in order to reduce this specification work, a configuration method by the BS may be considered.

As an example, the BS may configure, for the UE, the minimum scheduling unit and/or the scheduling step size, for PUSCH transmission, through higher layer signaling (e.g., a system information block (SIB) for an idle mode UE or dedicated RRC signaling for a connected mode UE). Based on the resources indicated by the BS, the UE may configure a PUSCH TX power according to regulations based on regions/bands, such as PSD requirements and the maximum power limit, and transmit a PUSCH.

As another example, the BS may indicate, to the UE, the minimum scheduling unit and/or the scheduling step size, for PUSCH transmission, through a dynamic method (e.g., a DCI field). If a UE for which the minimum scheduling unit and/or the scheduling step size has already been configured through higher layer signaling receives a new configuration dynamically through the DCI field or the like, the LTE may transmit the PUSCH according to the dynamically configured content.

In addition, for a dynamic grant PUSCH, the minimum scheduling unit and/or the scheduling step size, for PUSCH transmission, may be indicated through the DCI field, and for a configured grant PUSCH, the minimum scheduling unit and/or the scheduling step, for PUSCH transmission, may be indicated through higher layer signaling.

[Method 6: Method of determining the minimum scheduling unit and/or the scheduling step size, for PUSCH transmission, based on the number of PRBs of a (nominal) BW]

Method 6 is a method of determining the minimum scheduling unit and/or the scheduling step size, for PUSCH transmission, based on the number of PRBs of the (nominal) BW. For example, the minimum scheduling unit and/or the scheduling step size may be determined based on the total number of PRBs included in the BW so as not to generate residual PRBs. As a simple method, the minimum scheduling unit may be configured to be suitable for a minimum BW, and the scheduling step size may be configured to be smaller than the minimum scheduling unit, so that flexibility may be improved. Alternatively, the minimum scheduling unit and the scheduling step size may be configured to be the same so that the number of PRBs in the BWP is a multiple of the minimum scheduling unit.

As an example, the number of PRBs according to the SCS and BW size of FR4 based on the 3GPP TS 38.101-2 (FR2) specification may be configured as shown in Table 20.

[Table 20]

| SCS (kHz) | 50 MHz | 100 MHz | 200 MHz | 400 MHz | 800 MHz | 1600 MHz | 2000 MHz |
|---|---|---|---|---|---|---|---|
| | $N_{RB}$ | $N_{RB}$ | $N_{RB}$ | $N_{RB}$ | $N_{RB}$ | $N_{RB}$ | $N_{RB}$ |
| 60 | 66 | 132 | 264 | N.A | N.A | N.A | N.A |
| 120 | 32 | 66 | 132 | 264 | N.A | N.A | N.A |
| 240 | 16 | 32 | 66 | 132 | 264 | N.A | N.A |
| 480 | 8 | 16 | 32 | 66 | 132 | 264 | N.A |
| 960 | 4 | 8 | 16 | 32 | 66 | 132 | 160 |

As another example, the number of PRBs according to the SCS and BW size of FR4 may be configured as shown in Table 21 based on FR4 simulation assumption.

[Table 21]

| SCS (kHz) | 50 MHz | 100 MHz | 200 MHz | 400 MHz | 800 MHz | 1600 MHz | 2000 MHz |
|---|---|---|---|---|---|---|---|
| | $N_{RB}$ | $N_{RB}$ | $N_{RB}$ | $N_{RB}$ | $N_{RB}$ | $N_{RB}$ | $N_{RB}$ |
| 120 | 32 | 64 | 128 | 256 | N.A | N.A | N.A |
| 240 | 16 | 32 | 64 | 128 | 256 | N.A | N.A |
| 480 | 8 | 16 | 32 | 64 | 128 | 256 | N.A |
| 960 | 4 | 8 | 16 | 32 | 64 | 128 | 160 |

Table 22 shows an example capable of being configured such that the residual number of PRBs may not be generated in the BW while using almost the maximum TX power based on Table 21. Characteristically, since the number of PRBs per BW is set to a multiple of 4, 8, 16, or 32, the minimum scheduling unit and the scheduling step size may be equally configured.

[Table 22]

| SCS (kHz) | Minimum scheduling unit | Scheduling step size |
|---|---|---|
| 120 | 32 | 32 |
| 240 | 16 | 16 |
| 480 | 8 | 8 |
| 960 | 4 | 4 |

If the example of Table 20 and/or Table 22 is applied, when the SCS is used for PUSCH transmission in a BW size of 50 MHz, one UE may have to use all frequency resources at the same timing. In this case, an FDRA field in a DCI field may be a reserved field.

[Method 7: Method for reducing overhead of DCI formats for multi-PUSCH/PDSCH scheduling]

In B52 (FR4), multi-PUSCH and/or multi-PDSCH scheduling is not supported in fallback DCI (i.e., DCI format 0_0 and DCI format 1_0) and is supported in non-fallback DCI (i.e., DCI format 0_1 and DCI format 1_1) (see Table 23).

[Table 23]

| |
|---|
| - Do not use fallback DCI (i.e., DCI formats 0_0 and 1_0) for multi-PDSCH/PUSCH scheduling. <br> - Use DCI format 0_1 to schedule multiple PUSCHs with a single DCI. <br> - Use DCI format 1_1 to schedule multiple PDSCHs with a single DCI. |

As a method for reducing the overhead of a DCI format (i.e., DCI format 0_1 or DCI format 1_1) for multi-PUSCH and/or multi-PDSCH scheduling, FDRA field enhancement is being considered. For example, a method introduced for Rel-16 ultra-reliable low latency communications (URLLC) may be reused for multi-PUSCH/PDSCH scheduling of B52. In Rel-16 URLLC, when resource allocation type 1 is configured (RIV method), a method in which the BS configures PUSCH scheduling granularity has been introduced, which is indicated through "resourceAllocationType1GranularityDCI-0-2" of PUSCH-Config (see Table 24).

[Table 24]

| |
|---|
| resourceAllocationType1GranularityDCI-0-2-r16 ENUMERATED {n2,n4,n8,n16} OPTIONAL, -- Need S |

| |
|---|
| **resourceAllocationType1GranularityDCI-0-2** <br> Configures the scheduling granularity applicable for both the starting point and length indication for resource allocation type 1 in DCI format 0_2. If this field is absent, the granularity is 1 PRB |

The scheduling granularity may be set to one of 2 PRBs, 4 PRBs, 8 PRBs, and 16 PRBs using the resourceAllocationTypelGranularityDCI-0-2 parameter. If the BS does not indicate the resourceAllocationType1 GranularityDCI-0-2 parameter, the scheduling granularity is set to 1 PRB, which is a default setting value. The FDRA field of DCI format 0_2 is as follows.

[Table 25]

| |
|---|
| - Frequency domain resource assignment - number of bits determined by the following: <br>     - $N_{RBG}$ bits if only resource allocation type 0 is configured, <br>     - $\lceil \log_2(N_{RBG,K1}(N_{RBG,K1}+1)/2) \rceil$ bits if only resource allocation type 1 is configured, or <br>     $\max\left( \lceil \log_2(N_{RBG,K1}(N_{RBG,K1}+1)/2) \rceil, N_{RBG} \right) + 1$ bits if *resourceAllocationDCI-0-2-r16* is configured as <br> *'dynamicSwitch'*, where $N_{RBG,K1} = \left\lceil \left( N_{RB}^{UL,BWP} + \left( N_{UL,BWP}^{start} \bmod K1 \right) \right) / K1 \right\rceil$. $N_{RB}^{UL,BWP}$ is the size of the active <br> UL. bandwidth part, and $K1$ is given by higher layer parameter *resourceAllocationType1GranularityDCI-0-2*. If the higher layer parameter *resourceAllocationType1GranularityDCI-0-2* is not configured, $K1$ is equal to 1. |

where $N_{RBG}$ is the total number of RBGs in a BWP.

In Table 25, a value indicated through resourceAllocationType1GranularityDCI-0-2 is indicated as K1.

Therefore, the method introduced for Rel-16 URLLC may be used when resource allocation type 1 is configured in DCI formats (i.e., DCI format 0_1 and DCI format 1_1) for multi-PUSCH/PDSCH scheduling of B52. However, in the case of a higher layer parameter defined in existing Rel-16 URLLC, the UE operates using a value indicated by the BS regardless of the SCS value for PUSCH transmission.

Meanwhile, in B52, an SCS of 480 kHz and an SCS of 960 kHz are used in addition to an SCS used in existing FR2. Therefore, system implementation for a specific situation may not be sufficient only with {2, 4, 8, 16}, which are predefined values in the parameter resourceAllocationType1GranularityDCI-0-2. Accordingly, an additional value needs to be defined in addition to the predefined values. For example, a value such as 32 and/or 64 may further be included in the scheduling granularity value for B52.

Alternatively, for each SCS value for multi-PUSCH and/or multi-PDSCH transmission, the UE may differently interpret and apply the scheduling granularity value indicated by the BS. The BS may configure a new parameter such as resourceAllocationType1GranularityDCI-0-1 and/or resourceAllocationType1GranularityDCI-1-1 using {2, 4, 8, 16}, which are predefined values in the existing resourceAllocationType1GranularityDCI-0-2 parameter. When the scheduling granularity value is indicated through the new parameter, the BS may transmit the new parameter for a reference SCS previously known to the UE and the BS. In addition, when the scheduling granularity value is indicated through the new parameter, the BS may transmit the new parameter for the reference SCS used in an initial access procedure (e.g., an SSB or Msg. 2/4/B for a PDSCH and Msg. 1/3/A for a PUSCH). In addition, when the scheduling granularity value is indicated through the new parameter, the BS may transmit the new parameter for the reference SCS configured/indicated by the BS. The LTE may compare the SCS value for multi-PUSCH and/or multi-PDSCH transmission with the reference SCS, calculate and determine an actual scheduling granularity value based on the scheduling granularity value indicated by the BS, and perform multi-PUSCH transmission and/or multi-PDSCH reception. If the new parameter value is not indicated, the LTE may set the scheduling granularity value for multi-PUSCH transmission and/or multi-PDSCH reception to 1.

For example, the BS may indicate the scheduling granularity value N (e.g., N = 2, 4, 8, 16) to the UE through the new parameter. In this case, it is assumed that the reference SCS value is X kHz and the SCS value for multi-PUSCH transmission and/or multi-PDSCH reception is Y kHz. The LTE may determine the scheduling granularity value for multi-PUSCH transmission and/or multi-PDSCH reception based on an equation of $\max(N \times (Y/X), 1)$. Alternatively, the LTE may determine the scheduling granularity value for multi-PUSCH transmission and/or multi-PDSCH reception based on an equation of $\max(N \times (X/Y), 1)$. When the equation of $\max(N \times (Y/X), 1)$ is applied and when N=2, X=120, and Y=480, the UE may set the scheduling granularity for multi-PUSCH transmission and/or multi-PDSCH reception to 8 $(=\max(2 \times (480/120), 1))$. As another example, when the equation of $\max(N \times (X/Y), 1)$ is applied and when N=16, X=120, and Y=480, the LTE may set the scheduling granularity for multi-PUSCH transmission and/or multi-PDSCH reception to 4 $(=\max(16 \times (120/480), 1))$. In this case, since it is undesirable for the scheduling granularity value for multi-PUSCH transmission and/or multi-PDSCH reception to be smaller than 1, max(equation, 1) may be desirably included in the equation.

Characteristically, in the above method/equation, instead of X and/or Y, the form of $2^{\mu} \cdot 15$ may be used as a value for expressing the SCS. Table 26 shows the relationship between SCS values for each $\mu$ value. X kHz may be represented as $2^{\mu 1} \cdot 15$ kHz and Y kHz may be represented as $2^{\mu 2} \cdot 15$ kHz. Therefore, the equation of $\max(N \times (Y/X), 1)$ may be represented as $\max(N \times (2^{\mu 2 - \mu 1}), 1)$ and the equation of $\max(N \times (X/Y), 1)$ may be represented as $\max(N \times (2^{\mu 1 - \mu 2}), 1)$.

[Table 26]

| $\mu$ | $\Delta f = 2^{\mu} \cdot 15$[kHz] |
|---|---|
| 0 | 15 |
| 1 | 30 |
| 2 | 60 |
| 3 | 120 |
| 4 | 240 |
| 5 | 480 |
| 6 | 960 |

Additionally, Method 1 to Method 7 may also be used for resource configuration of signals and/or channels other than the PUSCH and the PDSCH. For example, when configuring resources for SRS transmission, the BS may indicate transmission resource configuration to the UE based on one of Method 1 to Method 7. The UE may transmit the SRS according to the indicated method.

Since each of the examples of the proposed methods may be included as one method for implementing the present disclosure, it is apparent that each example may be regarded as a proposed method. Although the proposed methods may be implemented independently, some of the proposed methods may be combined (or merged) for implementation. In addition, it may be regulated that information on whether the proposed methods are applied (or information on rules related to the proposed methods) should be transmitted from a BS to a UE through a predefined signal (e.g., a physical layer signal, a higher layer signal, etc.). A higher layer may include one or more of functional layers, such as MAC, RLC, PDCP, RRC, and SDAP.

Methods, embodiments, or descriptions for implementing the methods proposed in the present disclosure may be applied independently or one or more methods (or embodiments or descriptions) may be applied in combination.

Implementation Example

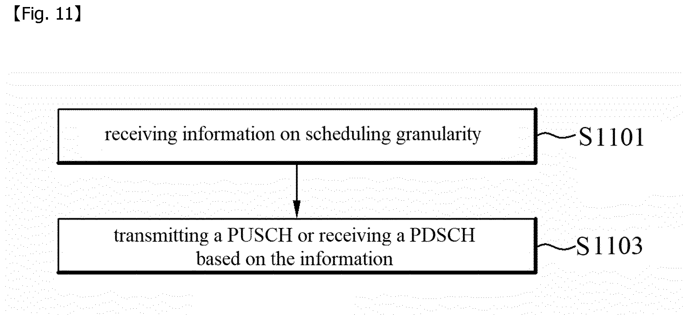

FIG. 11 is a flowchart of a signal transmission/reception method according to embodiments of the present disclosure.

Referring to FIG. 11, embodiments of the present disclosure may be performed by the UE and may include receiving information about scheduling granularity (S1101) and transmitting PUSCHs to which a first SCS is applied or receiving the PUSCHs to which the first SCS is applied, based on the information about scheduling granularity (S1103). Although not shown, the BS may transmit the information about scheduling granularity to the UE, and transmit PUSCHs to which the first SCS is applied and/or receive PDSCHs to which first SCS is applied, based on the information about scheduling granularity.

The PUSCHs and/or the PDSCHs may be configured based on a combination of one or more of the interlace structures of Method 1 to Method 3 proposed in Section 2.1.

In addition, the PUSCHs and/or the PDSCHs may be scheduled based on a combination of one or more of the resource allocation methods of Method 4 to Method 7 proposed in Section 2.2.

For example, when the PUSCHs and/or the PDSCHs are scheduled, configuration and interpretation of scheduling granularity for the PUSCHs and/or PDSCHs may be performed based on Method 7.

In Method 7, the PUSCHs and/or the PDSCHs may be scheduled by DCI of a format by which multi-scheduling is capable of being performed. For example, the PUSCHs may be scheduled by DCI format 0_1. PDSCHs may be scheduled by DCI format 1_1.

The information about scheduling granularity may be transmitted through, for example, a resourceAllocation-Type 1 GranularityDCI -0-2 parameter, a resourceAllocationType1GranularityDCI-0-1 parameter, and/or a resourceAllocationType1GranularityDCI-1-1 parameter.

The UE may determine a value of scheduling granularity to be applied to the PUSCHs and/or the PDSCHs based on the ratio of the first SCS to a reference SCS. Specifically, the value of the scheduling granularity may be determined as a value obtained by multiplying the ratio of the first SCS to the reference SCS by a value indicated by the information about the scheduling granularity. In addition, since it is undesirable for the value of scheduling granularity to be smaller than 1, when the value obtained by multiplying the ratio of the first SCS to the reference SCS by the value indicated by the information about scheduling granularity is smaller than 1, the value of scheduling granularity may be determined to be 1. This is represented by the equation of $\max(N\times(Y/X), 1)$ or $\max(N\times(X/Y), 1)$ of Method 7.

The reference SCS may be an SCS preconfigured between the UE and the BS, an SCS used in an initial access procedure of the UE, and/or an SCS indicated to the UE by the BS.

In addition to the operation described with respect to FIG. 11, one or more of the operations described with reference to FIGS. 1 to 10 and/or the operations described in Section 2 may be further performed in combination.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

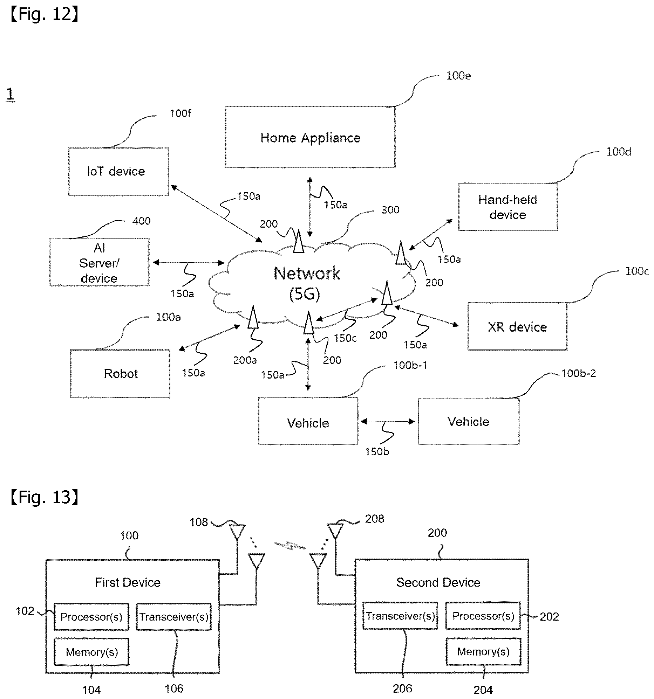

FIG. 12 illustrates a communication system 1 applied to the present disclosure.

Referring to FIG. 12, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100fBS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

FIG. 13 illustrates wireless devices applicable to the present disclosure.

Referring to FIG. 13, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

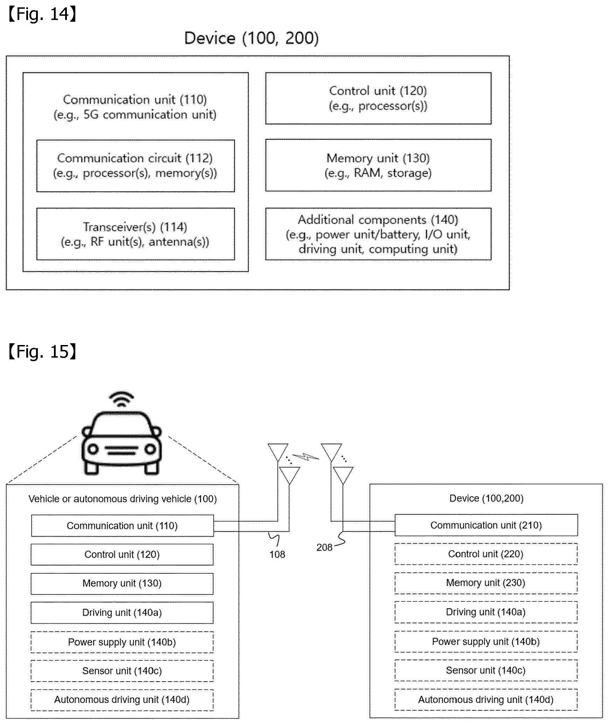

FIG. 14 illustrates another example of a wireless device applied to the present disclosure. The wireless device may be implemented in various forms according to a use case/service (refer to FIG. 12).

Referring to FIG. 14, wireless devices 100 and 200 may correspond to the wireless devices 100 and 200 of FIG. 13 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 19), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcasting terminal, a hologram device, a public safety device, an MTC device, a medical device, a FinTech device (or a finance device), a security device, a climate/environment device, the AI server/device (400 of FIG. 12), the BSs (200 of FIG. 12), a network node, or the like. The wireless device may be mobile or fixed according to a use case/service.

In FIG. 14, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 15 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 15, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 14, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**Industrial Applicability**

As described above, the present disclosure is applicable to various wireless communication systems.

**Claims**

1. A method of transmitting and receiving a signal by a user equipment (UE) in a wireless communication system, the method comprising:

   receiving information about scheduling granularity for physical uplink shared channels (PUSCHs) and/or physical downlink shared channels (PDSCHs); and
   transmitting the PUSCHs and/or receiving the PDSCHs, based on the information,
   wherein a first subcarrier spacing (SCS) is applied to the PUSCHs and the PDSCHs, and
   wherein a value of the scheduling granularity is determined based on a ratio of the first SCS to a reference SCS.

2. The method of claim 1, wherein the value of the scheduling granularity is determined by a value obtained by multiplying the ratio by a value indicated by the information.

3. The method of claim 2, wherein the ratio is a value obtained by dividing the first SCS by the reference SCS or a value obtained by dividing the reference signal by the first SCS.

4. The method of claim 2, wherein the value of the scheduling granularity is determined as 1 based on the value obtained by multiplying the ratio by the value indicated by the information being less than 1.

5. The method of claim 1, wherein the reference SCS is

   an SCS preconfigured between the UE and a base station (BS),
   an SCS used for an initial access procedure of the UE, or
   an SCS indicated to the UE by the BS.

6. A user equipment (UE) for transmitting and receiving a signal in a wireless communication system, the LTE comprising:

   at least one transceiver;
   at least one processor; and
   at least one memory operably connectable to the at least one processor and configured to store instructions that, when executed, cause the at least one processor to perform specific operations,
wherein the specific operations comprise:

receiving information about scheduling granularity for physical uplink shared channels (PUSCHs) and/or physical downlink shared channels (PDSCHs); and
transmitting the PUSCHs and/or receiving the PDSCHs, based on the information,
wherein a first subcarrier spacing (SCS) is applied to the PUSCHs and the PDSCHs, and
wherein a value of the scheduling granularity is determined based on a ratio of the first SCS to a reference SCS.

7. The UE of claim 1, wherein the value of the scheduling granularity is determined by a value obtained by multiplying the ratio by a value indicated by the information.

8. The UE of claim 7, wherein the ratio is a value obtained by dividing the first SCS by the reference SCS or a value obtained by dividing the reference signal by the first SCS.

9. The UE of claim 7, wherein the value of the scheduling granularity is determined as 1 based on the value obtained by multiplying the ratio by the value indicated by the information being less than 1.

10. The UE of claim 6, wherein the reference SCS is

an SCS preconfigured between the UE and a base station (BS),
an SCS used for an initial access procedure of the UE, or
an SCS indicated to the UE by the BS.

11. An apparatus for a user equipment (UE), the apparatus comprising:

at least one processor; and
at least one computer memory operably connectable to the at least one processor and configured to cause, when executed, the at least one processor to perform operations,
wherein the operations comprise:

receiving information about scheduling granularity for physical uplink shared channels (PUSCHs) and/or physical downlink shared channels (PDSCHs); and
transmitting the PUSCHs and/or receiving the PDSCHs, based on the information,
wherein a first subcarrier spacing (SCS) is applied to the PUSCHs and the PDSCHs, and
wherein a value of the scheduling granularity is determined based on a ratio of the first SCS to a reference SCS.

12. The apparatus of claim 11, wherein the value of the scheduling granularity is determined by a value obtained by multiplying the ratio by a value indicated by the information.

13. The apparatus of claim 12, wherein the ratio is a value obtained by dividing the first SCS by the reference SCS or a value obtained by dividing the reference signal by the first SCS.

14. The apparatus of claim 12, wherein the value of the scheduling granularity is determined as 1 based on the value obtained by multiplying the ratio by the value indicated by the information being less than 1.

15. The apparatus of claim 6, wherein the reference SCS is

an SCS preconfigured between the UE and a base station (BS),
an SCS used for an initial access procedure of the UE, or
an SCS indicated to the UE by the BS.

16. A computer-readable storage medium including at least one computer program that causes at least one processor to perform operations,
wherein the operations comprise:

receiving information about scheduling granularity for physical uplink shared channels (PUSCHs) and/or physical downlink shared channels (PDSCHs); and

transmitting the PUSCHs and/or receiving the PDSCHs, based on the information,

wherein a first subcarrier spacing (SCS) is applied to the PUSCHs and the PDSCHs, and

wherein a value of the scheduling granularity is determined based on a ratio of the first SCS to a reference SCS.

17. The storage medium of claim 16, wherein the value of the scheduling granularity is determined by a value obtained by multiplying the ratio by a value indicated by the information.

18. The storage medium of claim 17, wherein the ratio is a value obtained by dividing the first SCS by the reference SCS or a value obtained by dividing the reference signal by the first SCS.

19. The storage medium of claim 17, wherein the value of the scheduling granularity is determined as 1 based on the value obtained by multiplying the ratio by the value indicated by the information being less than 1.

20. The storage medium of claim 16, wherein the reference SCS is

an SCS preconfigured between the UE and a base station (BS),

an SCS used for an initial access procedure of the UE, or

an SCS indicated to the UE by the BS.

【Fig. 1】

【Fig. 2】

Resource grid

A carrier
(up to 3300 subcarriers, i. e., 275 RBs)

A BWP

1 RB = 12 subcarriers

1 RE

1 subcarrier

1 symbol

k = 0

l = 0

【Fig. 3】

【Fig. 4】

【Fig. 5】

【Fig. 6】

(a) Carrier aggregation between L-band and U-band

(b) Standalone U-band(s)

【Fig. 7】

【Fig. 8】

【Fig. 9】

【Fig. 10】

【Fig. 11】

receiving information on scheduling granularity ~S1101

transmitting a PUSCH or receiving a PDSCH
based on the information ~S1103

【Fig. 12】

<u>1</u>

【Fig. 13】

【Fig. 14】

Device (100, 200)

| | |
|---|---|
| Communication unit (110) (e.g., 5G communication unit) | Control unit (120) (e.g., processor(s)) |
| Communication circuit (112) (e.g., processor(s), memory(s)) | Memory unit (130) (e.g., RAM, storage) |
| Transceiver(s) (114) (e.g., RF unit(s), antenna(s)) | Additional components (140) (e.g., power unit/battery, I/O unit, driving unit, computing unit) |

【Fig. 15】

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108   208

Device (100,200)
- Communication unit (210)
- Control unit (220)
- Memory unit (230)
- Driving unit (140a)
- Power supply unit (140b)
- Sensor unit (140c)
- Autonomous driving unit (140d)

| INTERNATIONAL SEARCH REPORT | International application No. |
|---|---|
| | **PCT/KR2021/009431** |

**A.    CLASSIFICATION OF SUBJECT MATTER**

**H04W 72/04**(2009.01)i; **H04W 52/36**(2009.01)i; **H04W 52/14**(2009.01)i; **H04L 5/00**(2006.01)i; **H04W 76/28**(2018.01)i; **H04W 74/08**(2009.01)i

According to International Patent Classification (IPC) or to both national classification and IPC

**B.    FIELDS SEARCHED**

Minimum documentation searched (classification system followed by classification symbols)

H04W 72/04(2009.01); H04L 5/00(2006.01); H04W 56/00(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 스케줄링 입도(scheduling granularity), SCS(subcarrier spacing), PUSCH(physical uplink shared channel), PDSCH(physical downlink shared channel), 비율(ratio), 참조 SCS(reference SCS)

**C.    DOCUMENTS CONSIDERED TO BE RELEVANT**

| Category* | Citation of document, with indication, where appropriate, of the relevant passages | Relevant to claim No. |
|---|---|---|
| A | KR 10-1766706 B1 (HUAWEI TECHNOLOGIES CO., LTD.) 23 August 2017 (2017-08-23)<br>See paragraphs [0130]-[0140]; and claim 1. | 1-20 |
| A | US 2019-0059075 A1 (SHARP KABUSHIKI KAISHA) 21 February 2019 (2019-02-21)<br>See paragraphs [0080]-[0188]. | 1-20 |
| A | US 2020-0084002 A1 (TELEFONAKTIEBOLAGET LM ERICSSON (PUBL)) 12 March 2020 (2020-03-12)<br>See claims 61-75. | 1-20 |
| A | US 2019-0037559 A1 (SON, Yeongmoon) 31 January 2019 (2019-01-31)<br>See paragraphs [0045]-[0118]. | 1-20 |
| A | ZTE. Remaining issues on scheduling enhancement for MTC. R1-2001852, 3GPP TSG RAN WG1 Meeting #100 bis. 10 April 2020.<br>See section 2.2. | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 October 2021** | **25 October 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2021/009431**

| Patent document cited in search report | | | Publication date (day/month/year) | Patent family member(s) | | | Publication date (day/month/year) |
|---|---|---|---|---|---|---|---|
| KR | 10-1766706 | B1 | 23 August 2017 | CN | 104854904 | A | 19 August 2015 |
| | | | | CN | 104854904 | B | 21 June 2019 |
| | | | | EP | 3051873 | A1 | 03 August 2016 |
| | | | | JP | 2016-538765 | A | 08 December 2016 |
| | | | | JP | 6356793 | B2 | 11 July 2018 |
| | | | | US | 2016-0242200 | A1 | 18 August 2016 |
| | | | | WO | 2015-058401 | A1 | 30 April 2015 |
| US | 2019-0059075 | A1 | 21 February 2019 | AU | 2017-215808 | A1 | 16 August 2018 |
| | | | | AU | 2017-215808 | B2 | 24 December 2020 |
| | | | | CN | 109076517 | A | 21 December 2018 |
| | | | | CN | 109076517 | B | 08 June 2021 |
| | | | | EP | 3413658 | A1 | 12 December 2018 |
| | | | | EP | 3413658 | B1 | 19 August 2020 |
| | | | | ES | 2843399 | T3 | 16 July 2021 |
| | | | | JP | 2019-057745 | A | 11 April 2019 |
| | | | | MX | 2018009329 | A | 09 November 2018 |
| | | | | US | 10728880 | B2 | 28 July 2020 |
| | | | | WO | 2017-135385 | A1 | 10 August 2017 |
| US | 2020-0084002 | A1 | 12 March 2020 | CN | 109952802 | A | 28 June 2019 |
| | | | | EP | 3510823 | A1 | 17 July 2019 |
| | | | | US | 10999037 | B2 | 04 May 2021 |
| | | | | WO | 2019-029374 | A1 | 14 February 2019 |
| US | 2019-0037559 | A1 | 31 January 2019 | US | 10764888 | B2 | 01 September 2020 |
| | | | | WO | 2019-022536 | A1 | 31 January 2019 |

Form PCT/ISA/210 (patent family annex) (July 2019)